# EUROPEAN PATENT SPECIFICATION

(11) **EP 2 051 877 B1**
(45) Date of publication and mention of the grant of the patent: **27.02.2013**
(21) Application number: 07766160.1
(22) Date of filing: 05.07.2007
(51) Int. Cl.: B60N 3/10

(54) **A HOLDER FOR A VESSEL HAVING A BASE AND A STEM**
HALTER FÜR EIN GEFÄSS MIT STANDFLÄCHE UND STIEL
SUPPORT POUR RÉCIPIENT POURVU D'UNE BASE ET D'UNE TIGE

(30) Priority: 08.07.2006 GB 0613593
(43) Date of publication of application: 29.04.2009
(73) Proprietor: Bentley Motors Limited, Crewe, Cheshire CW1 3PL (GB)
(72) Inventor: WREN, Philip, Cheshire CW5 5QL (GB)
(74) Representative: Wilson Gunn
(86) International application number: PCT/GB2007/002503
(87) International publication number: WO 2008/007053

(56) References cited:
- DE-U1- 7 918 985
- JP-A- 10 086 734
- US-A1- 2005 274 862

## Description

The present invention relates to a holder for a vessel having a base and a stem such as a champagne flute. The holder is particularly, but not exclusively, intended for use in a vehicle such as a motor car.

Holders of this general type are already known. One such is described and claimed in US 6 969 035 B2. In the holder described in this patent specification a vertically movable stand element is provided upon which a glass to be held sits. Movable holding-down devices engage over the base of a glass sitting on the movable stand element. A locking device locks the holding devices against movement from the holding position into the removal position when the stand element has been moved downwardly into a holding position. This is an unnecessarily complicated arrangement and it is an object of the present invention to provide a simpler arrangement. Document DE 791898501 described another holder.

According to the present invention there is provided a holder for a vessel having a base and a stem comprising a housing including a base having a surface on which may be supported a vessel, characterized in that it comprises retaining means comprising one or more movable members operative in one position to urge a vessel in the holder on to the surface of the base of the housing to hold the vessel and in another position to enable a vessel to be withdrawn and resilient means coacting with the retaining means to urge the or each movable member into said one position and the or each movable member away from the said one position in dependence upon the position of a vessel in the holder.

In a preferred embodiment of the invention the or each movable member is pivotally connected to the housing. The housing advantageously defines one or more apertures to enable the or each respective member to move into and out of the housing. Preferably the or each aperture comprises a slot. Advantageously, the or each member comprises a stop to restrict movement of the member in relation to the housing. The or each member is substantially semi-circular in shape and has at least one resilient insert at the point at which it will in use bear on a vessel being held. Preferably, there are three members advantageously spaced at 120° angles with respect to the axis of the housing. Preferably, the housing is circular in cross-section. The resilient means preferably comprises an elastic band or a spring. Advantageously, the band or spring is mounted on projections formed on the external surface of the housing and on the or each member.

In order that the invention may be more clearly understood one embodiment of the invention will now be described, by way of example, with reference to the accompanying drawings, in which:-
Figure 1 is a perspective view of one form of holder showing a champagne/wine glass to be held therein displaced upwardly therefrom;
Figure 2 is a perspective view of the holder and glass of Figure 1 but with the glass held in position in the holder, and
Figures 3a - 3c respectively show cross-sectional views of the glass and holder in three different operational positions as the glass is pushed into the holder.

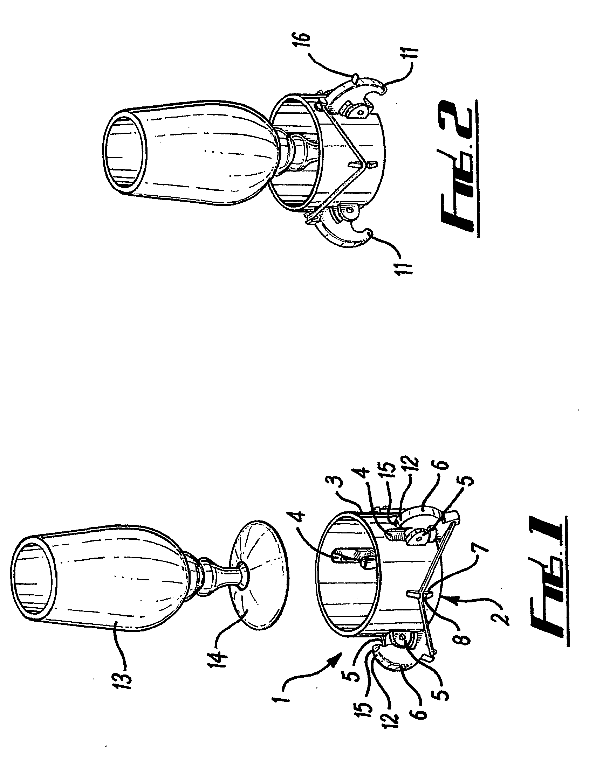

Referring to Figure 1, the holder comprises a housing 1 having a base 2 and a cylindrical wall 3. The wall 3 defines three slots 4 extending therethrough and spaced at 120° angles with respect to the axis of the cylinder. Adjacent each slot 4 and extending externally from wall 3 is a pair of spaced projections 5. Three cams 6 are respectively pivotally connected to the three pairs of projections 5. Three further projections 7 also spaced at 120° angles with respect to the axis of the cylinder extend externally from the wall 3. Each further projection 7 is formed with a slot 8 on its lower side and each cam 6 is also formed with a slot 9 on its lower side. Disposed in those slots 8 and 9 is an elongate endless elastic band or spring 10. Each cam 6 is substantially semicircular in shape. In the position shown in Figure 1, the band or spring 10 pulls down on that part 11 of each cam 6 below the corresponding pivot 5 urging parts 12 of the cams on the other side of the pivots away from the wall 3 and the parts 11 below the pivots into slots 4.

Referring additionally to Figure 2, as a glass 13 is inserted into the housing 1 of the holder, the base 14 of the glass contacts parts 11 of cams 6 pushing those parts out of the corresponding slots 4, pivoting the cams about the pivots provided by pairs of projections 5 against the action of the band or spring 10. As each cam is pivoted over its corresponding dead point the force of the band or spring 10 changes from resisting movement of the cams to assisting movement. Thus parts 12 of the cams 6 are pivoted through the corresponding slots 4 pressing down on the base 14 of the glass 13 and urging the glass against the base 2 of the holder to hold the glass firmly in position in the holder. Removal of the glass is the reversal of this insertion operation. Pulling the glass 13 upwardly pivots the cams 6 so that the parts 12 are withdrawn from the slots 4 initially against the force applied by the band or spring 10 until the dead point is passed when the force on the cams reverses direction. To protect the glass, each part 12 of the corresponding cam includes a soft material, such as rubber, insert 15.

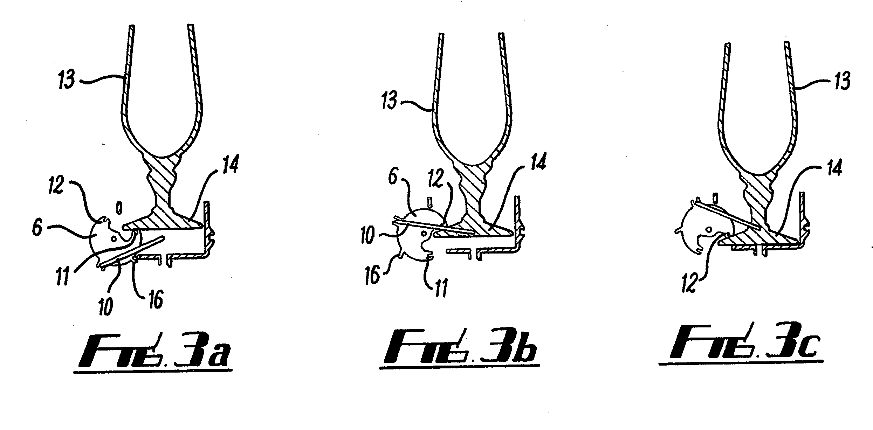

This clamping/unclamping may be seen more clearly by reference to the cross-sectional drawings of Figures 3a to 3c which show the different operational positions adopted by one of the three cams 6. Figure 3a shows the position as the glass is inserted into the holder. Prior to insertion the cam is urged by band or spring 10 in an anticlockwise direction, anticlockwise movement being limited by the abutment of a stop 16 on the cam on the base 2 of the holder. As the glass is inserted further into the holder as shown in Figure 3b, the base 14 of the glass pushes down on part 12 of the cam against the action of the band or spring 10 and until the cam passes the dead point beyond which the force of the band or spring reverses and pulls the cam down onto the base of the glass. This continues until the position shown in Figure 3c is reached when the part 12 of the cam urges the glass down onto the base 2 of the holder holding the glass firmly in position.

The housing and parts of the holder are advantageously made of synthetic plastics material. The band or spring may be made of rubber (synthetic or material) or metal.

It will be appreciated that the above embodiment has been described by way of example only and that many variations are possible without departing from the scope of the invention. For example, a microswitch may be provided in the holder and operated by insertion of a glass to illuminate a white LED/light disposed at the base of the holder.

## Claims

1. A holder for a vessel (13) having a base (14) and a stem comprising a housing (I) including a base (2) having a surface on which a vessel may be supported, **characterized in that** it comprises retaining means comprising one or more movable members (6) operative in one position to urge a vessel in the holder on to the surface of the base of the housing to hold the vessel and in another position to enable a vessel to be withdrawn and resilient means (10) coacting with the retaining means to urge the or each movable member into said one position and the or each movable member away from the said one position in dependence upon the position of a vessel in the holder.

2. A holder for a vessel as claimed in claim 1, in which the or each movable member is pivotally connected to the housing.

3. A holder for a vessel as claimed in claim 1 or 2, in which the housing defines one or more apertures (4) to enable the or each respective member to move into and out of the housing.

4. A holder for a vessel as claimed in claim 3, in which the or each aperture comprises a slot.

5. A holder for a vessel as claimed in any preceding claim, in which the or each member comprises a stop (16) to restrict movement of the member in relation to the housing.

6. A holder for a vessel as claimed in any preceding claim, in which the or each member is substantially semi-circular in shape.

7. A holder for a vessel as claimed in any preceding claim, in which the or each member comprises at least one resilient insert (15) at the point at which it will, in use, bear against a vessel being held.

8. A holder for a vessel as claimed in any preceding claim, in which there are three members.

9. A holder for a vessel as claimed in claim 8, in which the three members are spaced at 120° intervals with respect to the axis of the housing.

10. A holder for a vessel as claimed in any preceding claim, in which the housing is circular in cross-section.

11. A holder for a vessel as claimed in any preceding claim, in which the resilient means comprises an elastic band.

12. A holder for a vessel as claimed in any of claims 1 to 10, in which the resilient means comprises a spring.

13. A holder for a vessel as claimed in claims 11 or 12, in which the band or spring is mounted on projections (5) formed on the external surface of the housing and on the or each member.

## Patentansprüche

1. Halter für ein Gefäß (13) mit einem Fuß (14) und mit einem Stil, wobei der Halter ein Gehäuse (1) umfasst, das eine Grundplatte (2) mit einer Oberfläche, auf der ein Gefäß getragen werden kann, aufweist, **dadurch gekennzeichnet, dass** der Halter ein Haltemittel umfasst, das eines oder mehrere bewegliche Elemente (6) umfasst, die in einer Stellung betreibbar sind, um ein Gefäß in den Halter auf die Oberfläche der Grundplatte des Gehäuses zu drängen, um das Gefäß zu halten, und die in einer anderen Stellung betreibbar sind, um zu ermöglichen, dass ein Gefäß herausgenommen werden kann, und ein Federmittel (10), das mit dem Haltemittel zusammenwirkt, um je nach der Stellung eines Gefäßes in dem Halter das oder jedes bewegliche Element in die eine Stellung und das oder jedes bewegliche Element von der einen Stellung weg zu drängen.

2. Halter für ein Gefäß nach Anspruch 1, in dem das oder jedes bewegliche Element mit dem Gehäuse drehbar verbunden ist.

3. Halter für ein Gefäß nach Anspruch 1 oder 2, in dem das Gehäuse eine oder mehrere Öffnungen (4) definiert, um zu ermöglichen, dass sich das oder jedes jeweilige Element in das und aus dem Gehäuse bewegt.

4. Halter für ein Gefäß nach Anspruch 3, in dem die oder jede Öffnung einen Schlitz umfasst.

5. Halter für ein Gefäß nach einem vorhergehenden Anspruch, in dem das oder jedes Element einen Anschlag (16) zum Beschränken der Bewegung des Elements in Bezug auf das Gehäuse umfasst.

6. Halter für ein Gefäß nach einem vorhergehenden Anspruch, in dem das oder jedes Element im Wesentlichen halbkreisförmig ist.

7. Halter für ein Gefäß nach einem vorhergehenden Anspruch, in dem das oder jedes Element an dem Punkt, an dem es in Verwendung an einem Gefäß, das gehalten wird, anliegt, wenigstens einen Federeinsatz (15) umfasst.

8. Halter für ein Gefäß nach einem vorhergehenden Anspruch, in dem es drei Elemente gibt.

9. Halter für ein Gefäß nach Anspruch 8, in dem die drei Elemente in Bezug auf die Achse des Gehäuses in Abständen von 120° beabstandet sind.

10. Halter für ein Gefäß nach einem vorhergehenden Anspruch, in dem das Gehäuse einen kreisförmigen Querschnitt aufweist.

11. Halter für ein Gefäß nach einem vorhergehenden Anspruch, in dem das Federmittel ein elastisches Band umfasst.

12. Halter für ein Gefäß nach einem der Ansprüche 1 bis 10, in dem das Federmittel eine Feder umfasst.

13. Halter für ein Gefäß nach einem der Ansprüche 11 oder 12, in dem das Band oder die Feder an Vorsprüngen (5) angebracht ist, die an der Außenoberfläche des Gehäuses und an dem oder jedem Element gebildet sind.

## Revendications

1. Support pour un récipient (13) présentant une base (14) et une tige comprenant un logement (1) comprenant une base (2) ayant une surface sur laquelle un récipient peut être supporté, **caractérisé en ce qu'**il comprend des moyens de retenue comprenant un ou plusieurs éléments mobiles (6) opérationnels dans une position pour pousser un récipient dans le support sur la surface de la base du logement pour supporter le récipient et dans une autre position pour permettre de retirer un récipient et des moyens élastiques (10) co-agissant avec les moyens de retenue pour pousser le ou chaque élément mobile dans ladite une position et le ou chaque élément mobile à distance de ladite une position, dépendamment de la position d'un récipient dans le support.

2. Support pour un récipient selon la revendication 1, dans lequel le ou chaque élément mobile est raccordé de manière pivotante au logement.

3. Support pour un récipient selon la revendication 1 ou 2, dans lequel le logement définit une ou plusieurs ouvertures (4) pour permettre au ou à chaque élément respectif d'entrer dans ou de sortir du logement.

4. Support pour un récipient selon la revendication 3, dans lequel la ou chaque ouverture comprend une fente.

5. Support pour un récipient selon l'une quelconque des revendications précédentes, dans lequel le ou chaque élément comprend une butée (16) pour limiter le mouvement de l'élément par rapport au logement.

6. Support pour un récipient selon l'une quelconque des revendications précédentes, dans lequel le ou chaque élément est sensiblement de forme semi-circulaire.

7. Support pour un récipient selon l'une quelconque des revendications précédentes, dans lequel le ou chaque élément comprend au moins un insert élastique (15) au niveau du point il s'appuiera, à l'usage, contre un récipient qui est maintenu.

8. Support pour un récipient selon l'une quelconque des revendications précédentes, dans lequel il y a trois éléments.

9. Support pour un récipient selon la revendication 8, dans lequel les trois éléments sont espacés à des intervalles de 120° par rapport à l'axe du logement.

10. Support pour un récipient selon l'une quelconque des revendications précédentes, dans lequel le logement a une section transversale circulaire.

11. Support pour un récipient selon l'une quelconque des revendications précédentes, dans lequel les moyens élastiques comprennent une bande élastique.

12. Support pour un récipient selon l'une quelconque des revendications 1 à 10, dans lequel les moyens élastiques comprennent un ressort.

13. Support pour un récipient selon les revendications 11 ou 12, dans lequel la bande ou le ressort est monté(e) sur des saillies (5) formées sur la surface externe du logement et sur le ou chaque élément.
